# EUROPEAN PATENT APPLICATION

(11) **EP 4 614 373 A1**
(43) Date of publication of application: **10.09.2025**
(21) Application number: 24161796.8
(22) Date of filing: 06.03.2024
(51) Int. Cl.: G06F 21/62, G06F 9/54, H04L 67/55

(54) **EVENT MESSAGE PULLING MODULE**

(71) Applicant: Barclays Execution Services Limited, London E14 5HP (GB)
(72) Inventor: PATHAK, Nikesh, 411014 Pune (IN); KUMAR, Sumit, 411014 Pune (IN); KASALE, Sagun, 411014 Pune (IN); CHOUHAN, Prathviraj, 411014 Pune (IN)
(74) Representative: Carpmaels & Ransford LLP

(57) **Abstract**

There is provided a module for pulling an event message to a cloud-based data service application. The module may be configured to pull at least one event message from at least one cloud-based data streaming application. For each event message of the at least one event message, the module may be configured to select and retrieve at least one filter criterion from a plurality of filter criteria based at least in part on at least one event message configuration parameter of the event message. The module may be configured to apply the at least one filter criterion to the event message. If the event message passes the filter criterion, the module may be configured to determine whether event message schema validation is required based on the at least one event message configuration parameter. If event message schema validation is not required, the module may be configured to send the event message to at least one cloud-based data service application. If event message schema validation is required, validate the event message based at least in part on comparing the event message to at least one schema record. If the event message schema validation is successful, the module may be configured to send the event message to at least one cloud-based data service application.

## Description

### Technical Field

The present invention relates generally to the field of event message pulling, and more particularly to a module for pulling an event message to a cloud-based data service application.

### Background

In contemporary digital environments, data has become ubiquitous, with a notable surge in the prevalence of protected data. Defined by its sensitive cognitive content and requirement for rigorous security measures, the prominence of protected data is steadily increasing. Consequently, there has been a corresponding escalation in the demand for systems specialised in processing protected data.

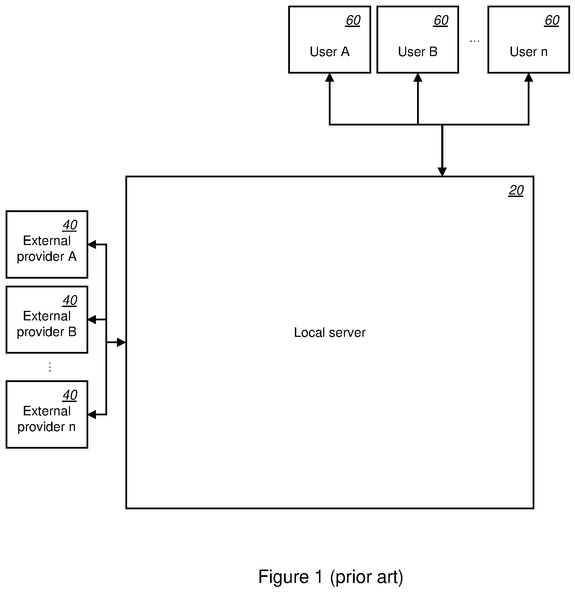

Traditionally, the processing of protected data has been centralised around local servers, as depicted in Figure 1. A local server serves as the focal point responsible for executing protected data processing tasks. These local servers are typically situated on-premises or within a private network environment, physically hosting a myriad of applications specialised in processing various aspects of protected data. In practical scenarios, these applications cater to diverse purposes, often corresponding to distinct products or services. For instance, in the context of consumer banking, one application may handle debit card transactions, while another may focus on credit card transactions.

Despite their historical prevalence, local servers are increasingly facing challenges for protected data processing. Such challenges include scalability constraints, overhead associated with maintenance, geographic limitations, data protection compliance, security vulnerabilities, computer resource redundancy, and latency issues. In light of these challenges and the ever-increasing complexity of the data processing landscape, a need has emerged for systems for processing protected data that transcend the limitations of local servers.

One way of removing the reliance on local servers is to move to a cloud-based implementation. However, whilst cloud-based implementations avoid the drawbacks specifically associated with local servers as set out above, working with cloud-based implentations presents a series of its own challenges. Some of these challenges arise because running complex processes in the cloud typically requires the fast and secure transmission of protected data between a plethora of different domains within the cloud. These domains are not generally mutually compatible, often having their own proprietary communication protocols. In addition, maintaining security of the protected data remains crucial. Whilst US2021/397493A1 considers enabling communication between a message source and a target system whilst performing validation checks during the communication, that implementation fails to consider the problem of enabling communication between multiple message sources and multiple target systems. Providing a means of transmitting protected data securely and efficiently between multiple different cloud-based domains remains an outstanding challenge.

### Summary

The present invention is defined by the independent claims, with further optional features being defined by the dependent claims.

In a first aspect of the invention, there is provided a module for pulling an event message to a cloud-based data service application. The module is configured to pull at least one event message from at least one cloud-based data streaming application. For each event message of the at least one event message, the module is configured to select and retrieve at least one filter criterion from a plurality of filter criteria based at least in part on at least one event message configuration parameter of the event message. The module is further configured to apply the at least one filter criterion to the event message. If the event message passes the at least one filter criterion, the module is configured to determine whether event message schema validation is required based on the at least one event message configuration parameter. If event message schema validation is not required, the module is configured to send the event message to at least one cloud-based data service application. If event message schema validation is required, the module if configured to validate the event message based at least in part on comparing the event message to at least one schema record. If the event message schema validation is successful, the module is configured to send the event message to at least one cloud-based data service application. The configuration of the module to read the event message configuration parameter, which is a property of each event message, allows it to apply a filter criterion that is specific to each event message. This enables the event messages to be filtered based on message-specific characteristics, such as their origin and/or their intended destination. Since the module can treat each event message differently, it can process event messages of a wide range of different types and originating from multiple different sources, and can direct them to multiple different destinations. The module also ensures security and efficiency by applying both schema validation and filtering. This enables secure, efficient message transfer between multiple different cloud-based domains.

The module being configured to validate the event message can further comprise the module being configured to determine whether the at least one schema record is stored in cache memory. If the at least one schema record is not stored in cache memory, the module is configured to retrieve the at least one schema record from a schema registry and store the at least one schema record in cache memory. This is important to allow the schema validation to take place regardless of whether the required schema record is already stored in cache, enabling the module to maintain message security.

If the event message schema validation is unsuccessful, the module may be further configured to mark the event message as invalid. This marking allows corrupted or damaged messages to be easily identified.

If the event message schema validation is unsuccessful, the module may be further configured to send the event message to the at least one cloud-based data service application. This offloads the processing of the non-validated messages to the service application(s), reducing the demands placed upon the bandwidth of the module and enabling the module to run more efficiently. It also allows further validation checks to be performed on the non-validated messages at the service application(s) (or elsewhere).

The module may be further configured to select the at least one filter criterion based in part on the at least one cloud-based data service application. Making the message filtering conditional on the intended destination of an event message supports the versatility of the module.

The module being configured to receive the at least one event message from the at least one cloud-based data streaming application can further comprise the module being configured to receive at least two event messages from at least two cloud-based data streaming applications. This makes the module more flexible by explicitly enabling it to work with event messages originating from more than one streaming application.

Each cloud-based data streaming application may be associated with a corresponding domain of a first type. Each cloud-based data service application may be associated with a corresponding domain of a second type. Each cloud-based data streaming application may be associated with a corresponding cloud-based account of a first type. Each cloud-based data service application may be associated with a corresponding cloud-based account of a second type. Associating each streaming application and each service application with their own corresponding domain/cloud-based account allows the processing requirements of the applications to be outsourced onto the domains/accounts, reducing the pressure on central processing.

The at least one cloud-based data streaming application may be associated with a first domain and the at least one cloud-based data service application may be associated with a second domain. The at least one cloud-based data streaming application may be associated with a first cloud-based account and the at least one cloud-based data service application may be associated with a second cloud-based account. Associating the streaming application(s) with a single domain/account and the service application(s) with another single domain/account reduces the number of domains/accounts that are required, which makes information transfer easier whilst nevertheless reducing the pressure on central processing.

The at least one cloud-based data service application may be configured to perform at least one of data streaming, data queueing, and data storing. These are important functionalities and ensuring that the module is compatible therewith makes the module useful in a wider variety of settings.

The at least one cloud-based data service application may be selected based at least in part on the at least one event message configuration parameter. This enables the module to route event messages to a destination that is selected according to a message-specific configuration parameter. Since it can treat each event message individually, the module can handle a wider variety of different event messages.

The at least one cloud-based data streaming application and the at least one cloud-based data service application may be selected to define an event-driven application based at least in part on a configuration file, the module optionally further configured to execute at least two different event-driven applications. Providing a process configuration file that influences the applications that are involved in the process enables the module to be configured specifically to the process(es) being performed, making the module more versatile.

The at least one event message configuration parameter may contain information indicative of the event-driven application. This enables the filtering and schema validation to be adjusted based on the event-driven application that is being performed, making the module more versatile.

Each event message may comprise a corresponding event type, and the module may be further configured to pull at least two event messages from the at least one cloud-based data streaming application, wherein at least two of the corresponding event types of the at least two event messages are not identical. The ability to work with multiple different types of event message gives the module added versatility.

The at least one event message configuration parameter of each event message may be indicative of the corresponding event type of the event message, and/or the at least one filter criterion may be selected based on the corresponding event type of the event message. Treating event messages of different types according to different filter criteria enables the module to work with different types of event message, making it more versatile and enabling it to perform a wider variety of processes.

The module may be further configured to receive information indicative of a first number of event messages generated by the at least one cloud-based data streaming application, determine a second number of event messages pulled by the module, determine whether the first number and the second number are equivalent, and if the first number and the second number are not equivalent, generate an alert for a user. This constitutes an additional security check that determines whether the number of sent event messages is the same as the number of received event messages, and alerts a user if it is not. This makes it less likely that event messages will be lost in transit, increasing the security of the process.

The module may be a cloud-based module. Hosting the module itself in the cloud further reduces the reliance on local servers, avoiding the associated drawbacks as set out above.

In a second aspect of the invention, there is provided a cloud computing environment comprising the module of the first aspect of the invention.

In a third aspect of the invention, there is provided a computer program configured to implement the module of the first aspect of the invention.

In a fourth aspect of the invention, there is provided a non-transitory computer readable medium comprising instructions that, when executed by a processor, cause the processor to implement the module of the first aspect of the invention.

### Brief Description of the Drawings

Embodiments of the invention are described below, by way of example, with reference to the following drawings, in which:
Figure 1 depicts a conventional system for processing protected data.
Figure 2 illustrates a cloud computing environment-based system for processing protected data in which the methods of the invention may be implemented.
Figure 3A and Figure 3B show components of a cloud computing environment for implementing the invention.
Figure 4A and Figure 4B show an example user device and example external provider system, respectively, that may be used in conjunction with the cloud computing environment-based system of the invention.
Figure 5 shows an example architecture of a cloud computing environment for implementing the invention.
Figure 6A, Figure 6B and Figure 6C show example integration patterns of a cloud computing environment for implementing the invention.
Figure 7A shows a flow diagram of a pull adapter module according to the invention.
Figure 7B shows another flow diagram of a pull adapter module according to the invention.

### Detailed Description

The present disclosure pertains to systems for processing protected data and methods related to processing protected data. Protected data, as referred to herein, is data that requires protecting due to its cognitive content. This means that protected data typically requires additional security provisions to prevent unauthorised access. Moreover, the storage and processing of protected data is often restricted. In some instances, the restriction is caused by local legislation, for example General Data Protection Regulation (GDPR) in the European Union, and the Data Protection Act 2018 in the United Kingdom. Protected data may include personal data, i.e., information relating to an identified or identifiable natural person. For example, secure data may include a name, an identification number, location data, an online identifier or one or more factors specific to the physical, physiological, genetic, mental, economic, cultural or social identity of a natural person. Protected data may also include financial data as an alternative or in addition.

Figure 1 illustrates a conventional system for processing protected data. As shown in Figure 1, such systems are centralised around a local server 20 that is responsible for performing the processing. The local server 20 is communicatively coupled to a plurality of user devices 60 (i.e. User A, User B... User n), from which processing requests may be received and to which processing outputs may be sent. Typically, a processing request relates to protected data of the user of the user device 40 that sends the request. The local server 20 is also communicatively coupled to a plurality of external provider systems 40 (i.e. External provider A, External provider B... External provider n), as some processes require input from an external provider to be performed. The communicative coupling is established via at least one communication network such as the Internet, a local area network (LAN), a wide area network (WAN), a cellular network (e.g. such as 3G, 4G LTE and 5G), and the like.

Local server 20 is a physical server or group of servers that are located on-premises or within a private network. Local server 20 stores a plurality of applications for processing protected data, each of the applications having a different purpose or underlying product to which it relates. For example, in a consumer banking context, one application may relate to debit card transactions while another application relates to credit card transactions.

The applications stored by local server 20 are typically batch-driven applications. This type of application is designed to process data in batches, where a set of data is collected, processed, and output before the next set of data is collected and processed. In this context, a 'batch' refers to a collection or grouping of data, tasks, or operations that are processed together as a single unit. Batch processing involves the execution of multiple tasks or data operations in a sequential or parallel manner, typically on a scheduled basis or when a predefined batch size is reached. Batches are often used to efficiently manage and process large volumes of data or perform complex operations that do not require real-time or immediate processing. For this reason, batch-driven applications may be thought of as synchronous applications. This is in contrast to event-driven applications which are asynchronous applications as the processing occurs once the data is received.

The local server 20 is configured to generate and receive messages in a relational data format. Relational data formats are structured and organised in tables, with rows representing records and columns representing attributes. This type of data format is commonly used in traditional database management systems and can be easily queried and manipulated using Structured Query Language (SQL). The use of a relational data format for message generation and reception at the local server 20 allows for compatibility with legacy systems and applications that rely on this type of data format.

### The Cloud Computing Environment

In contrast to conventional protected data processing systems such as the one depicted in Figure 1 where processing is performed primarily on the local server 20, the systems of the invention use a cloud computing environment 10 for protected data processing. Cloud computing environment 10 provides improved scalability, flexibility, reliability, and disaster recovery capabilities over local servers. This is because the infrastructure for cloud computing environment 10 is typically provided by dedicated cloud providers such as Amazon Web Services, Google Cloud or Microsoft Azure, that handle updates and maintenance of the infrastructure.

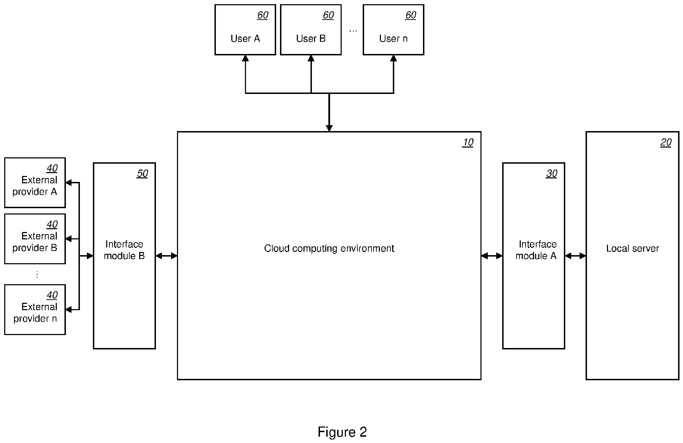

Figure 2 depicts an example system having a cloud computing environment 10 for processing protected data in which the invention may be implemented. As shown in Figure 2, the local server 20 is still present in this system. However, instead of being communicatively coupled to the plurality of user devices 60 and the plurality of external provider systems 40, the local server 20 is communicatively coupled to the cloud computing environment 10, and it is the cloud computing environment 10 which is communicatively coupled to the plurality of user devices 60 and the plurality of external provider systems 40. The communicative coupling is established via at least one communication network such as the Internet, a local area network (LAN), a wide area network (WAN), a cellular network (e.g. such as 3G, 4G LTE and 5G), and the like. Preferably, the at least one communication network utilises encryption (e.g., Secure Sockets Layer) to secure protected data being transferred to and from the cloud computing environment 10.

While the plurality of user devices 60 are able to natively couple to the cloud computing environment 10, for example via a dedicated application installed on the user device 60, local server 20 and external provider systems 60 typically contain legacy infrastructure and applications, and for this reason cannot natively be coupled to the cloud computing environment 10. This is because, unlike local server 20 and external provider systems 60 which use batch-driven applications, cloud computing environment 10 uses event-driven applications, where data is processed as events.

In the context of event-driven applications, an 'event' refers to a discrete and significant occurrence or notification within the cloud computing environment 10 that triggers a specific action or process. Events are used to signal that a particular condition or change has occurred and should be processed or responded to. For this reason, event-driven applications are designed to detect, capture, and respond to these events in real-time or near-real-time, allowing for responsive and dynamic behaviour within event-driven applications. Events can be generated by various sources, such as user interactions via user device 60, system events, or external sources such as external provider system 40 and local server 20, and they serve as the catalyst for initiating specific actions, processing logic, or workflows within the cloud computing environment 10.

Accordingly, interface modules are provided in the system to couple the local server 20 and the external provider systems 60 with the cloud computing environment 10. Specifically, Figure 2 shows a first interface module (interface module A) 30 that couples the local server 20 to the cloud computing environment 10, and a second interface module (interface module B) 50 that couples the external provider systems 60 to the cloud computing environment 10. Interface module A 30 and interface module B 50 may be outside and separate from the cloud computing environment. However, preferably, the cloud computing environment 10 contains interface module A 30 and interface module B 50. When interface module A 30 and interface module B 50 are provided in the cloud computing environment 10, these interface modules provide communicative coupling to the plurality of user devices 60 and the plurality of external provider systems 40, respectively.

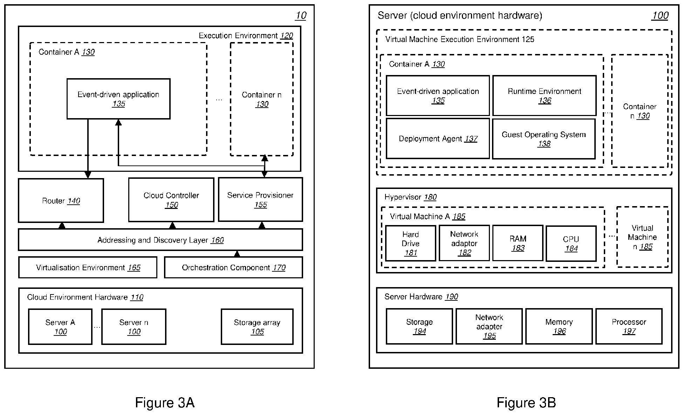

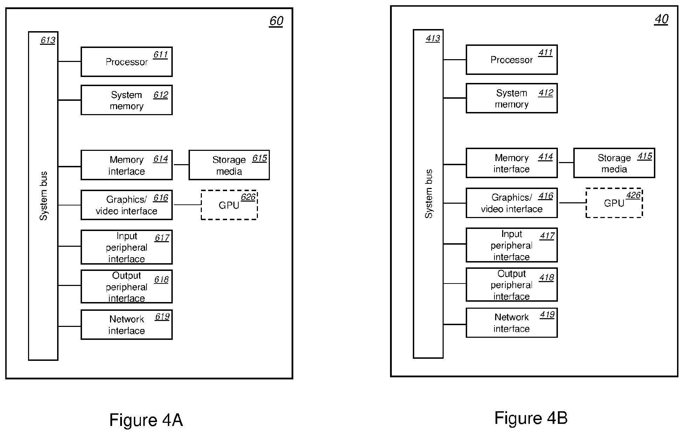

Before providing further details about cloud computing environment 10, interface module A 30, and interface module B 50, the components of cloud computing environment 10, as typically provided by a cloud provider, are discussed with respect to Figure 3A and Figure 3B. Additionally, an example user device 60 and example external provider system are discussed with respect to Figure 4A and Figure 4B.

As shown in Figure 3A, cloud computing environment 10 hosts one or more event-driven applications 135, which are executed in the cloud computing environment 10 for processing protected data that take the form of events. The event-driven application 135 may include executable and/or source code, depending on the implementation language. In this way, the computing resources required for processing protected data are moved from the local server 20, where the processing is performed in conventional systems, to cloud computing environment 10.

As seen in Figure 3A, cloud computing environment 10 comprises cloud computing environment hardware 110 that can be invoked to instantiate data processing, data storage, or other computer resources using cloud computing hardware 110 for a limited or defined duration. Cloud computing environment hardware 110 may comprise one or more physical servers 100, and a storage array network 105, as well as other suitable hardware. Cloud computing environment hardware 110 may be configured to provide a virtualisation environment 165 that supports the execution of a plurality of virtual machines 185 across the one or more physical servers 100. As described in relation to Figure 3B, the plurality of virtual machines 185 provide various services and functions for cloud computing environment 10.

Virtualisation environment 165 of Figure 3A includes orchestration component 170 that monitors the cloud computing environment hardware 110 resource consumption levels and the requirements of cloud computing environment 10 (e.g., by monitoring communications routed through addressing and discovery layer 160), and provides additional cloud computing environment hardware 110 to cloud computing environment 10 as needed. For example, if cloud computing environment 10 requires additional virtual machines 185 to host a further event-driven application 135, orchestration component 170 can initiate and manage the instantiation of the virtual machines 310 on the one or more servers 100 to support such needs. In one example implementation, virtualisation environment 165 may be implemented by running Amazon Elastic Compute Cloud (Amazon EC2) on servers 100.

Cloud computing environment 10 supports an execution environment 125 that comprises a plurality of virtual machines 185 (or plurality of containers 130) instantiated to host the one or more event-driven applications 135.

Event-driven applications 135 can access internal services provided by cloud computing environment 10 as well as external services from the plurality of external providers 40 and from the local server 20. A service provisioner 155 may serve as a communications intermediary between these available services (e.g., internal services and external services) and other components of cloud computing environment 10 (e.g., cloud controller 150, router 140, containers 130), utilising the methods discussed elsewhere herein. Addressing and discovery layer 160 provides a common interface through which components of cloud computing environment 10, such as service provisioner 155, cloud controller 150, router 140 and containers 130 in the execution environment 125 can communicate.

Cloud controller 150 is configured to orchestrate the deployment process for the one or more event-driven applications 135 in cloud computing environment 10. Typically, once cloud controller 150 successfully orchestrates the event-driven application 135 in a container, e.g. container A 130, the event-driven application 135 may be interacted with. For example, a user device 60 may interact with the event-driven application 135 through a web browser or any other appropriate user application residing on user device 60. Router 140 receives the access requests (e.g., a uniform resource locator or URL) and routes the request to container 130 which hosts the event-driven application.

It should be recognised that the embodiment of Figure 3A is merely exemplary and that alternative cloud computing environment architectures may be implemented consistent with the teachings herein.

Figure 3B is a schematic of an exemplary server 100 for implementing the cloud computing environment 10 of the invention. In particular, Figure 3B depicts server 100 comprising server hardware 190 and virtual machine execution environment 125 having containers 130 with event-driven applications 135. The server hardware 190 may include local storage 194, such as a hard drive, network adapter 195, system memory 196, processor 197 and other I/O devices such as, for example, a mouse and keyboard (not shown).

A virtualisation software layer, also referred to as hypervisor 180, is installed on top of server hardware 190. Hypervisor 180 supports virtual machine execution environment 185 within which containers 130 may be concurrently instantiated and executed. In particular, each container 130 one or more event-driven applications 135, deployment agent 137, runtime environment 136 and guest operating system 138 packaged into a single object. This enables container 130 to execute event-driven applications 135 in a manner which is isolated from the physical hardware (e.g. server hardware 190, cloud computing environment hardware 110), allowing for consistent deployment regardless of the underlying physical hardware.

As shown in Figure 3B, virtual machine execution environment 125 of server 100 supports a plurality of containers 130. Docker is an example of a virtual machine execution environment 125 which supports containers 130. For each container 130, hypervisor 180 manages a corresponding virtual machine 185 that includes emulated hardware such as virtual hard drive 181, virtual network adaptor 182, virtual RAM 183, and virtual CPU 184.

It should be recognised that the various layers and modules described with reference to Figure 3B are merely exemplary, and that other layers and modules may be used with the same functionality without departing from the scope of the invention. It should further be recognised that other virtualised computer architectures may be used, such as hosted virtual machines.

Turning to Figure 4A, an example user device 60 for communicating with the cloud computing environment 10 is shown. User device 60 may be embodied as any type of computer, including a server, a desktop computer, a laptop, a tablet, a mobile device, or the like. Components of user device 60 include, but are not limited to, a processor 611, such as a central processing unit (CPU), system memory 612, and system bus 613. System bus 613 provides communicative coupling for various components of user device 60, including system memory 612 and processor 611. Example system bus architectures include parallel buses, such as Peripheral Component Interconnect (PCI) and Integrated Drive Electronics (IDE), and serial buses, such as PCI Express (PCIe) and Serial ATA (SATA).

System memory 612 is formed of volatile and/or non-volatile memory such as read only memory (ROM) and random-access memory (RAM). ROM is typically used to store a basic input/output system (BIOS), which contains routines that boots the operating system and sets up the components of user device 60, for example at start-up. RAM is typically used to temporarily store data and/or program modules that the processor 611 is operating on.

User device 60 includes other forms of memory, including (computer readable) storage media 615, which is communicatively coupled to the processor 611 through a memory interface 614 and the system bus 613. Storage media 615 may be or may include volatile and/or non-volatile media. Storage media 615 may be or may include removable or non-removable storage media. Examples storage media 615 technologies include: semiconductor memory, such as RAM, flash memory, solid-state drives (SSD); magnetic storage media, such as magnetic disks; and optical storage, such hard disk drives (HDD) and CD, CD-ROM, DVD and BD-ROM. Data stored in storage medium 615 may be stored according to known methods of storing information such as program modules, data structures, or other data, the form of which is discussed further herein.

Various program modules are stored on the system memory 612 and/or storage media 615, including an operating system and one or more user applications. Such user applications may cause the user device 60 to interact with cloud computing environment 10. For instance, the user application may cause an event-driven application 135 to begin processing protected data on the cloud computing environment 10.

User device 60 is communicatively coupled to the cloud computing environment 10 via the least one communication network, such as the Internet. Other communication networks may be used including a local area network (LAN) and/or a wide area network (WAN). Further communication networks may be present in various types of user device 60, such as mobile devices and tablets, to cellular networks, such as 3G, 4G LTE and 5G. User device 60 establishes communication through network interface 619.

User device 60 is communicatively coupled to a display device via a graphics/video interface 616 and system bus 613. In some instances, the display device may be an integrated display. A graphical processing unit (GPU) 626 may be used in addition to improve graphical and other types of processing. User device 60 also includes an input peripheral interface 617 and an output peripheral interface 618 that are communicatively coupled to the system bus 613. Input peripheral interface is communicatively coupled to one or more input devices, such as a keyboard, mouse or touchscreen, for interaction between the user device 60 and a user. Output peripheral interface 618 is communicatively coupled to one or more output devices, such as a speaker. When not integrated, the communicative coupling may be wired, such as via a universal serial bus (USB) port, or wireless, such as over Bluetooth.

Figure 4B depicts an example external provider system 40. The components of the external provider system 40 may be the same as those described above for user device 60. In particular, the external provider system 40 may comprise a system bus 413, processor 411, system memory 412, memory interface 414, storage media 415, graphics/video interface 416, GPU 426, input peripheral interface 417, output peripheral interface 418 and network interface 419. In certain embodiments, the external provider system 40 may take the form of an enterprise server.

### Cloud Computing Environment Architecture

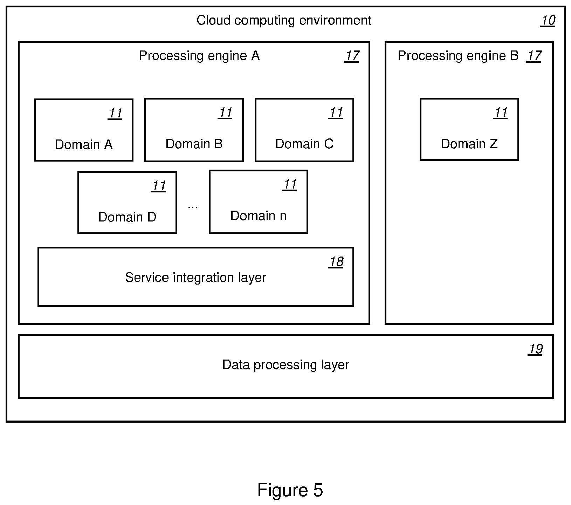

Figure 5 depicts an embodiment of cloud computing environment 10 architecture for implementing the present invention.

As shown in Figure 5, the cloud computing environment 10 contains one or more processing engines 17. Preferably, there are a plurality of processing engines 17. Figure 5 depicts two processing engines, processing engine A and processing engine B. Each processing engine 17 in the cloud computing environment 10 is a logical partition that is responsible for providing a particular processing function or subset of processing functions. Each processing engine 17 operates in an event-driven fashion. In other words, each processing engine 17 processes data as discrete events, and is able to support event-driven applications 135 of the type discussed with respect to Figure 3A and Figure 3B.

Each processing engine 17 has one or more domains 11. The domains 11 in a particular processing engine 17 provide security boundaries for protected data in the cloud computing environment 10. These domains may be separate and distinct within the cloud computing environment 10 allowing for the control of access to data based on different security levels. This separation of domains ensures that data is protected and only accessible by authorised users or applications. The domains 11 also modularise the particular processing function or subset of processing functions. Such modular architectures offer advantages such as scalability, reusability, and ease of maintenance by breaking the processing engine 17 down into smaller, interchangeable domains. Like the processing engines 17, each domain 11 processes data as discrete events and is therefore able to support event-driven applications 135 of the type discussed with respect to Figure 3A and Figure 3B. Moreover, each domain 11 may be implemented through serverless capabilities of the cloud computing environment 10. For example, when the cloud computing environment 10 is an AWS environment, such serverless capabilities may include DynamoDB, Amazon S3, AWS Lambda, AWS Step Functions, and Amazon API gateway. Optionally, each domain 17 may be composed of one or more sub domains.

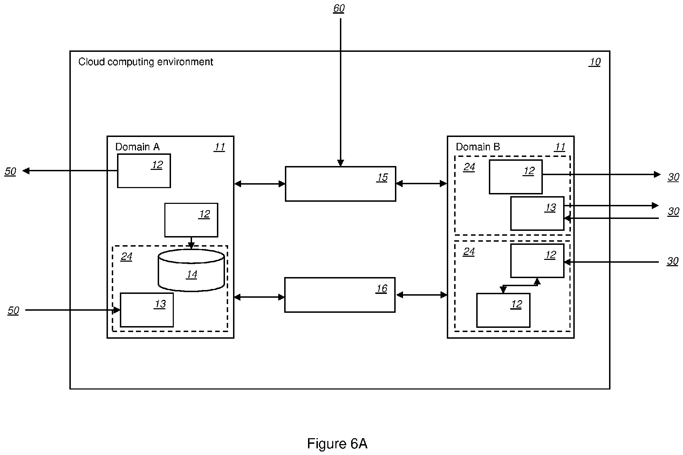

Referring briefly to Figure 6A, each domain 11 contains one or more processing modules 12. The processing modules 12 are event-driven and can be used within one or more event-driven applications 135. Put another way, the processing modules 12 are agnostic to the event-driven applications 135, and therefore may be combined with other components to easily create a new event-driven application 135. This flexibility enables the cloud computing environment 10 to adapt to changing requirements and support a wide range of event-driven applications 135. When the cloud computing environment 10 is an AWS environment, each of the processing modules 12 may be hosted on AWS ECS (Container) running on EC2 or AWS Fargate.

In some examples, the domain 11 may include one or more data streams 13 that are configured to stream protected data. These data streams 13 are event-driven and may have incoming and outgoing connections to various components within the cloud computing environment 10 and outside of the cloud computing environment 10. For instance, within the cloud computing environment 10, the data streams 13 may be used to communicate data to and/or from one or more processing modules 12, one or more domains 11, one or more processing engines 17, one or more databases 14, and the like. Outside of the cloud computing environment 10, the data streams 13 may be used to communicate with local server 20 and/or external provider systems 40. In an AWS environment, such data streams 13 may be provided by Amazon Kinesis, which is a particular type of scalable and durable real-time data streaming application 100, or another data streaming application 100.

Each domain 11 may also contain one or more domain databases 14. Domain databases 14 may be used for different reasons, such as to log event processing occurring within the domain 11. In some examples, a database 14 is configured to store protected data. The database 14 may be a NoSQL database, such as DynamoDB, which provides a flexible and scalable approach for storing and managing data. The use of a NoSQL database 14 ensures that the cloud computing environment 10 can efficiently handle large volumes of data and support a wide range of applications.

The one or more processing modules 12, data streams 13, and domain databases 14 work together to provide a scalable, secure, and efficient domain 11 for processing and managing protected data.

In some examples, the domain 11 may be sub-divided into one or more cloud-based accounts 24. Any one or more of the processing modules 12, data streams 13 and domain databases 14 may be associated with a particular cloud-based account 24. Alternatively, it may be that none of the processing modules 12, data streams 13 and domain databases 14 is associated with the particular cloud-based account 24. The domain 11 may comprise one or more processing modules 12, data streams 13, and/or domain databases 14 that are not associated with any cloud-based account 24. Additionally or alternatively, a processing module 12, data stream 13 or domain database 14 may be associated with more than one cloud-based account 24. In one example, a domain database 14 may work together with several processing modules 12, and each of these processing modules 12 may be associated with its own corresponding cloud-based account 24. In this scenario, the domain database 14 is associated with each of the corresponding cloud-based accounts 24. For example, as shown in Figure 6A, domain A 11 comprises a single cloud-based account 24 with which data stream 13 and domain database 14 are associated. Also as shown in Figure 6A, domain B 11 comprises two cloud-based accounts 24. One of the processing modules 12 and the data stream 13 are associated with a first cloud-based account 24 of domain B 11, and the remaining two processing modules 12 are associated with a second cloud-based account 24 of domain B 11.

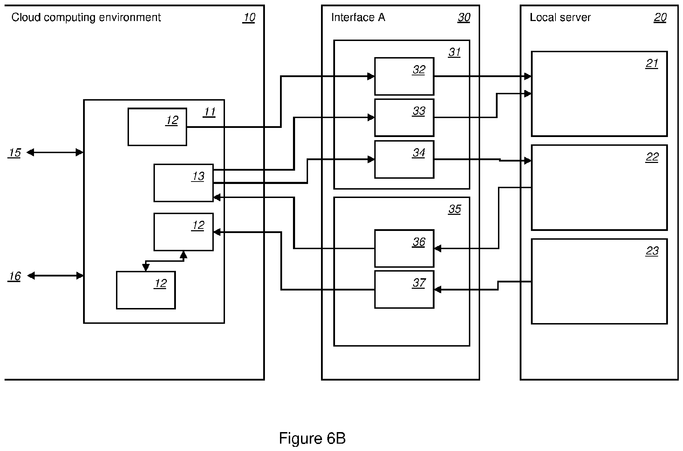

Referring back to Figure 5, processing engine 17 may contain a service integration layer 18. The service integration layer 18 is responsible for communications with local server 20. In particular, the service integration layer 18 uses APIs and/or event streaming patterns (as discussed with respect to Figure 6B) to enable standardisation and scaling for data between the processing engine 17 in the cloud computing environment 10 and the local server 20. Preferably, the service integration layer 18 includes an anti-corruption layer to facilitate integration between local server 20 (which does not support event-driven applications) to the cloud computing environment 10 (which does support event-driven applications) and vice versa.

In one particular consumer banking example, the cloud computing environment 10 is an AWS environment. In such an example, the cloud computing environment 10 includes at least two processing engines 17: processing engine A relating to financial product processing and processing engine B relating to application processing. Processing engine A 17 includes a plurality of domains 11, i.e. domains A, B, C, D... n. Such domains may include product management domains, primary domains, feature-driven domains and supplementary domains. Examples of primary domains include a payment processing domain, which manages real time account balances and supports user payment activity, and a transaction processing domain which relates to accounting and operational processing. Another example of a primary domain is an account operation domain, which controls how the execution of a process for an account is to be operated. Processing engine B includes one domain 11, i.e. domain Z. Such a domain may be an apply domain that is used so that a new or established user can apply to receive various resources (e.g. financial resources). The apply domain may also be used to on-board new users to the cloud computing environment 10.

Turning back to Figure 5, the cloud computing environment 10 also includes a data processing layer 19. The data processing layer 19 provides a common aggregation point for cloud computing environment 10 for providing data to various data platforms, for further analysis and/or manipulation.

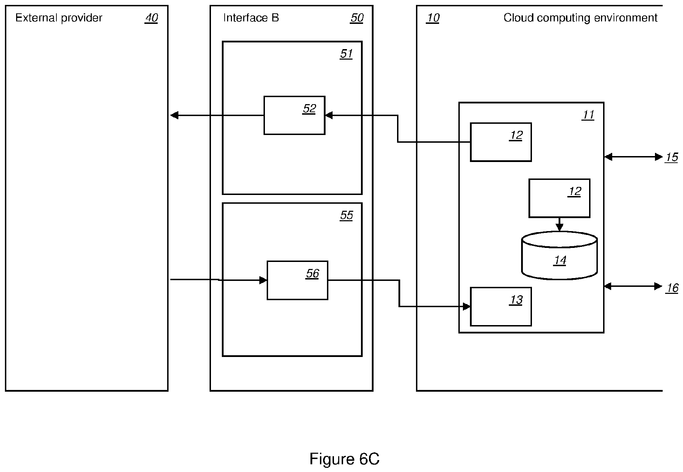

Figure 6A, Figure 6B and Figure 6C show example integration patterns of cloud computing environment 10 for implementing the invention. The integration patterns are a prescribed set of rules for connecting and coordinating different software components to and within the cloud computing environment 10. Such integration patterns particularly assist with data exchange, communication, and interoperability of various applications, including event-driven applications 135 and batch-driven applications. Figure 6A shows integration patterns within cloud computing environment 10 and from user device 60. Figure 6B depicts integration patterns between cloud computing environment 10 and local server 20, whilst Figure 6C shows integration patterns between cloud computing environment 10 and external provider system 40.

Referring first to Figure 6A, two integration patterns are shown. In particular, the cloud computing environment 10 is shown to include a first integration pattern, an inter-domain API (Application Programming Interface) 15. The inter-domain API 15 is configured to connect user devices 60 with one or more domains 11. This inter-domain API 15 allows user devices 60 to access and interact with the cloud computing environment 10, enabling users to, for example, call an application service API exposed by a domain 11 and/or access and manage their protected data securely and efficiently. In particular, this connection allows the user devices 60 to access and interact with the various processing modules 12, data streams 13, and other components within the domains 11.

In some examples, the inter-domain API 15 may provide a secure and efficient communication channel between the user devices 60 and the cloud computing environment 10. This secure communication channel may be established using various security protocols, including HTTPS, and encryption techniques to ensure the confidentiality, integrity, and availability of the data being transmitted between the user devices 60 and the cloud computing environment 10. The inter-domain API 15 may also provide various functionalities and services to the user devices 60, such as authentication, authorisation, data retrieval, data manipulation, and other application-specific operations. By providing these functionalities and services, the inter-domain API 15 enables the user devices 60 to seamlessly interact with the cloud computing environment 10 and perform various tasks and operations within the hosted applications 135.

A second integration pattern, pull adapter 16, is also shown in Figure 6A. In Figure 6A, pull adapter 16 is positioned between two (or more) domains, and allows events in one (or more) domain(s) to be pushed or pulled to one (or more) other domain(s). This pull adapter 16 enables efficient communication and data transfer between domains, ensuring that data is processed and managed securely and efficiently within the cloud computing environment 10. This is particularly advantageous in a cloud computing environment 10 that comprises a plurality of domains 11 with different security boundaries and data processing requirements. Alternatively or additionally, pull adapter 16 may be positioned within a single domain and may allow events in that domain to be pushed or pulled within the same domain. In this scenario, pull adapter 16 may allow events to be pushed or pulled between different cloud-based accounts 24 that are associated with the same domain 11.

The pull adapter 16 is designed to support event-driven communication between domains 11, which is a key aspect of the asynchronous event-driven applications 135 hosted within the cloud computing environment 10. By enabling events in one domain 11 to be pushed or pulled (or "published") to another domain 11 as needed, the pull adapter 16 ensures that the processing modules 12 within the domains 11 can efficiently handle and process the protected data in an event-driven manner. The pull adapter 16 may be configured to support different event data formats, including NoSQL and JSON, to ensure compatibility with the various processing modules 12 and applications 135 within the cloud computing environment 10.

Reference is now made to Figure 6B, which depicts integration patterns between cloud computing environment 10 and local server 20. Figure 6B provides a more detailed view of the first interface module (interface module A) 30, which includes a first conversion module 31 and a second conversion module 35.

The first conversion module 31 is configured to handle outgoing data from the cloud computing environment 10 to the local server 20, and includes three integration patterns: outbound to local server API 32, fire and forget API 33, and a file batcher 34. The outbound to local server API 32 pattern is used where the local server 20 needs to consume real-time data from the cloud computing environment 10. Fire and forget API 33 is used where some of the events within the cloud computing environment 10 need to be pushed to the local server 20. File batcher 34 is used to collect events and consolidate the events into a scheduled batch file to provide to the local server 20.

The second conversion module 35 is configured to handle incoming data from the local server 20 to the cloud computing environment 10 and comprises two integration patterns: file debatcher 36 and inbound from local server API 37. File debatcher 36 is used to pass data from the local server, which is typically in the form of a batch file, to the cloud computing environment 10, which is event-driven. The inbound from local server API 37 is used where data is to be passed in real-time from the local server 20 to the cloud computing environment 10.

It is noted that, as shown in Figure 6B, local server 20 may comprise a plurality of partitions, such as a first partition 21, a second partition 22, and a third partition 23. These servers may be responsible for different tasks or functions related to the processing of protected data in synchronous batch-driven applications. Although three partitions are shown in Figure 6B, any number of partitions, including a single partition, may be present at local server 20.

Reference is now made to Figure 6C which shows integration patterns between cloud computing environment 10 and external provider system 40. In particular, Figure 6C provides further details of the second interface module (interface module B) 50, which includes a first conversion module 51 and a second conversion module 55. Each of the conversion modules in the second interface module 50 has its own integration pattern. In particular, the first conversion module 51 is responsible for sending protected data out to the external provider system 40 from the cloud computing environment 10, and therefore has an outbound to external provider API 52. The second conversion module 55 is responsible for receiving data from the external provider system 40 to the cloud computing environment 10, and therefore has an inbox to external provider API 56.

It should be appreciated that the architecture of cloud computing environment 10 of Figure 5 and the integration patterns of Figure 6A, Figure 6B and Figure 6C are merely exemplary. Other architectures and integration patterns may be used for implementing the invention.

### Pull Adapter

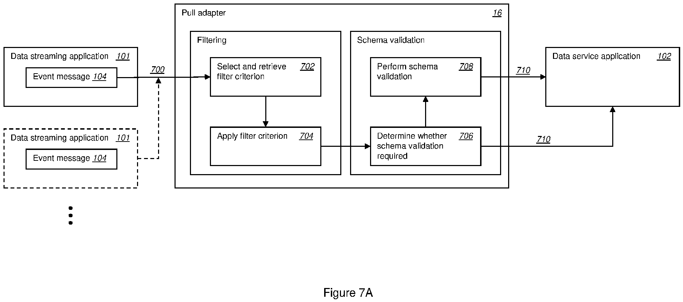

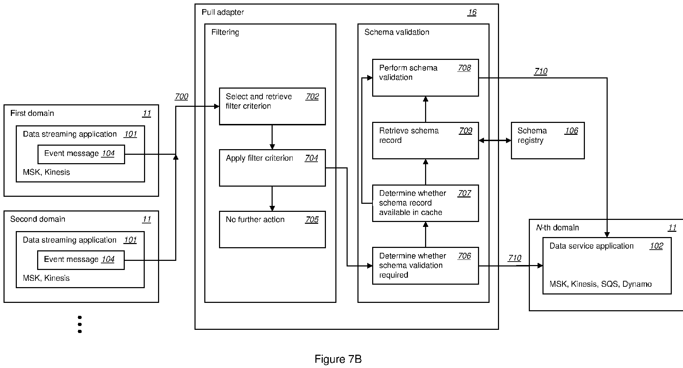

Figures 7A and 7B depict examples of the operation of pull adapter 16. As shown in Figures 7A and 7B, pull adapter 16 is an interface between one or more cloud-based data streaming applications 101 and one or more cloud-based data service applications 102.

Pull adapter 16 takes the form of a module. In other words, pull adapter 16 is part of a modular system that also includes one or more data streaming application(s) 101 and/or one or more data service application(s) 102. Pull adapter 16 may be a cloud-based module.

Pull adapter 16 may be part of cloud computing environment 10. Referring back to Figure 5, pull adapter 16 may be part of the service integration layer 18 described previously. Pull adapter 16 may be implemented by a computer program. Pull adapter 16 may be implemented by a process upon execution by the processor of computer-readable instructions embodying pull adapter 16.

A data streaming application 101, which, as mentioned, interfaces the pull adapter 16, is an application responsible for streaming data i.e. it is an example of a data stream 13. As shown in the example embodiment of Figure 7B, the data streaming application 100 may be Managed Kafka (denoted "MSK" in Figure 7B) or Amazon Kinesis. In other examples, data streaming application 101 may be Amazon Managed Streaming for Amazon Web Services, AWS, Rabbit MQ, Amazon Simple Notification Service, Amazon Simple Queue Service, or Apache RocketMQ.

A data service application 102, which also interfaces the pull adapter 16, is an application responsible for acting on data i.e. it is a destination for data. A data service application 102 may be configured to perform one or more of data streaming, data queueing, and data storing. Accordingly, a data service application 102 may include one or more databases 14 and/or one or more processing modules 12, and may generate one or more data streams 13. As shown in the example embodiment of Figure 7B, the data service application 102 may be Managed Kafka, Amazon Kinesis, Amazon Simple Queue Service, or Amazon DynamoDB. Additionally or alternatively, the data service application 102 may be Amazon Managed Streaming for Amazon Web Services, AWS, Rabbit MQ, Amazon Simple Notification Service, or Apache RocketMQ.

The one or more data streaming applications 101 and one or more data service applications 102 may be associated with domains 11 within the cloud computing environment 10, as described above. As one example, each data streaming and data service application 102 may be associated with a corresponding domain 11 i.e. all of the applications may have their own unique domain 11, as shown in Figure 7B. As another example, all of the data streaming applications 101 may be associated with a first domain 11 (which could be called a streaming domain), and all of the data service applications 102 can be associated with a second domain 11 (which could be called a service domain). Within each domain 11 there may be one or more cloud-based accounts 24. The one or more data streaming applications 101 and the one or more data service applications 102 may each be associated with a cloud-based account 24. If all of the data streaming applications 101 are associated with a first domain 11, they may all be associated with a first cloud-based account 24 within the first domain 11 or they may each be associated with their own corresponding cloud-based account 24 within the first domain 11. If all of the data service applications 102 are associated with a second domain 11, they may all be associated with a second cloud-based account 24 within the second domain 11 or they may each be associated with their own corresponding cloud-based account 24 within the second domain 11.

As explained previously, cloud computing environment 10 uses event-driven applications, where data are processed as events. Data take the form of messages. Accordingly, data moved between applications and/or domains within the cloud-computing environment are referred to as event messages 104. As explained previously, in the context of event-driven applications 135, an 'event' refers to a discrete and significant occurrence or notification within the cloud computing environment 10 that triggers a specific action or process. For example, an event could correspond to a user request for the creation of a new account. The specific action or process triggered in response could include informing the user of the terms and conditions associated with holding an account.

The event messages 104 can be of a particular type, termed an event type. The event types are a set of categories, into at least one of which each event message falls. The event types may refer to the type of event to which they relate. For example, as previously described, a first type of event message 104 could correspond to an event generated by a user interaction (e.g. via user device 60), a second type of event message 104 could correspond to a system event, and a third type of event message 104 could correspond to an event generated by an external source (e.g. external provider system 40, local server 20). These are merely example types of events and are not to be construed as limiting; other types of event are possible. The event messages 104 can be of a particular type and may also be of a particular sub-type. The sub-types are additional categories within each possible event type. As a first example, the event type may be a "Update user details event". The sub-types within that event may include "updated triggered by user request" and "update triggered by failed attempt to contact user". As a second example, the event type may be "Repayment event". The sub-types within that event type may include "Internal transfer", "BACS payment", and "Direct debit". As a third example, the event type may be a "Close user account event". The sub-types within that event may include "account closure triggered by user request", "account closure triggered by user inactivity", and "account closure triggered by account lifespan being reached". The invention is not limited to these specific event types.

Each event message 104 may include one (or more) event message configuration parameter(s). The event message configuration parameter is a property of the event message 104 to which it belongs. The event message configuration parameter can be indicative of global information, such as an event-driven application 135 (mentioned above and described in more detail below) being run by the cloud computing environment 10, and/or of message-specific settings such as the type of event message 104 to which it belongs.

Figures 7A and 7B illustrate, in steps 700 to 710, pull adapter 16 acting on one or more event messages 104. This may be part of performing an event-driven application 135 as described in more detail below.

At the first step, step 700, pull adapter 16 is configured to pull one (or more) event message(s) 104 from one (or more) cloud-based data streaming application(s) 101. Optionally, pull adapter 16 may be configured to pull event messages 104 from more than one data streaming application 101, as indicated in Figure 7A by the data streaming application 101 and corresponding pull process in dashed outline. In certain embodiments, pull adapter 16 may be configured to pull event messages 104 from more than two data streaming applications 101, as indicated in Figures 7A and 7B by the vertical ellipse.

Certain event-driven applications 135, and certain data service applications 102, use certain event messages 104 and do not use certain other event messages 104. Accordingly, for a given event-driven application 135 or a given data service application 102, certain event messages 104 may be relevant and certain other event messages 104 may not be relevant. Hence, as the next step 702, pull adapter 16 is configured to perform filtering of the event messages 104 which have been pulled in step 700.

The filtering performed in step 702 may depend on the event message configuration parameter (as mentioned above), which can contain information about the type and/or sub-type of event message 104, the event-driven application 135 being run, and/or the intended data service application 102 to which the event message 104 should be sent. Hence, based on the event message configuration parameter, the type of event message 104, and/or the data service application 102 to which the event message 104 should be sent, pull adapter 16 is configured to select and retrieve at least one filter criterion from a plurality of possible filter criteria. The at least one filter criterion may be a test of whether the event message 104 is of an eligible type and/or of whether the event message is of an eligible sub-type. The eligible type (or sub-type) may refer to whether the event message 104 is of a type (or sub-type) eligible to be included in an event-driven application 135 being run.

It may be possible for several different data streaming applications 101 to generate event messages 104 of a particular type. For example, pull adapter 16 may operate in an environment that stores user details. An event message 104 that indicates that a user's details need to be updated may be triggered by a request from the user to change their details, or by a failed attempt to contact the user. In this example, the type of event message 104 is one that indicates that a user's details need to be updated. Two sub-types of this type of event message 104 are: initiated by user request, and failed attempt to contact user. The environment may contain a data service application 102 that is configured to request that the user provide updated details. This data service application 102 is needed when the user has not yet provided updated details, such as when the event message 104 was triggered by a failed attempt to contact the user. Hence, when pushing to this data service application 102, pull adapter 16 may be configured to select for event messages 104 that indicate that a user's details need to be updated (which is an example of an eligible event type filter) and that have been triggered by a failed attempt to contact the user (which is an example of an eligible event sub-type filter). Event messages 104 that do not satisfy both of these two filter criteria, such as event messages 104 initiated by user request, will not be pushed to data service application 102 by pull adapter 16.

Once retrieved, as the next step 704, pull adapter 16 is configured to apply the retrieved filter criterion to the incoming event message 104. The filter criterion is a binary (i.e. pass, fail) check of whether a given event message 104 satisfies the filter criterion or filter criteria. If the incoming event message 104 passes the filter criterion, the event message 104 proceeds to the next step of the method performed by pull adapter 16. If the event message 104 does not pass the filter criterion, the event message 104 may be discarded. Alternatively, if the event message 104 does not pass the filter criterion, pull adapter 16 may be configured to mark the event message 104 with details regarding the failure of the filter criterion. As another alternative, as shown in Figure 7B, if the event message 104 does not pass the filter criterion, pull adapter 16 may be configured in a further step, step 705, to take no further action with that event message 104.

A filter criterion that can be selected for each event message 104 enables different event messages 104 to be treated differently, allowing pull adapter 16 to work with a wide range of event messages 104 of different types and/or sub-types, originating from different cloud-based data streaming applications 101 and/or intended for different cloud-based data service applications 102.

In a further step, step 708, schema validation may be performed to enhance data security and robustness. Such a step is used to ensure that data contained within the event messages 104 are valid. This may be a check that the data are, for example, within an expected range and/or contain the expected data fields. However, in certain instances, it may not be necessary to perform step 708. For example, in a context or during an event-driven application 135 which does not require schema validation (e.g. because other methods of ensuring security are present, or because the given type and/or sub-type of event message 104 does not contain sensitive data) then unnecessarily performing schema validation can waste resources and bandwidth. Hence, at step 706, pull adapter 16 is configured to determine, based on the event message configuration parameter, whether schema validation is required. As one example, the event message configuration parameter may contain a binary data field that specifically indicates whether schema validation is required, and the determination may simply require that data field to be read. Alternatively, the event message configuration parameter may contain a 32-digit alphanumeric universally unique identifier (UUID) within which the information indicating whether schema validation is required is encoded. As an alternative example, an event-driven application 135 may require schema validation of event messages 104 of certain event types and not of others, such that the determination may require the event type of an event message 104 to be read from the event message configuration parameter. As another alternative, pull adapter 16 may be configured not to perform any schema validation when in a testing phase, and may be configured to perform schema validation of every event message 104 once the testing phase is complete. These are merely example means of determining whether schema validation is required; other means are possible.

The schema record, against which the event message 104 is validated, may be stored in cache memory or in a schema registry. The schema registry may be within a domain 11, a cloud-based account 24, or elsewhere in cloud-computing environment 10. Using a registry of schema records allows different types of schema record to be used, depending on the context. As shown in Figure 7B, at step 707 pull adapter 16 may be configured to determine whether the required schema record is available in cache. If pull adapter 16 determines at step 707 that the required schema record is not available in cache, pull adapter 16 may be configured to perform step 709.

In step 709, pull adapter is configured to retrieve the required schema record from a schema registry 106 and store the schema record in cache.

Once the schema record is stored in cache, at step 708, the schema validation is performed by pull adapter 16. The schema validation may take the form of a comparison between the content of the event message 104 and the schema record. As mentioned above, the comparison may be between a data value in the event message 104 and a data value or range of data values in the schema record, to check whether the data value in the event message 104 is valid. The comparison could be between a set of data fields in the event message 104 and a set of expected data fields defined by the schema record, to check whether the event message 104 has a valid set of data fields.

Schema validation may be unsuccessful if the event message 104 fails the validation at step 708. This may be because, for example, the event message 104 does not contain the expected data fields, and/or because the data values in the event message 104 are outside of the expected range. Optionally, if the schema validation is unsuccessful, the event message 104 may be marked by pull adapter 16 as having failed the validation. This marking may be added to the event message configuration parameter, where it can be read during subsequent stages of an event-driven application 135. This enables any subsequent step of the event-driven application 135 to conveniently identify the event messages 104 that have not been validated without requiring the subsequent step to perform schema validation again, improving efficiency. The marking also facilitates diagnosis of the cause of the failure of the schema validation. Alternatively or additionally, if the schema validation is unsuccessful, the event message 104 may be moved to a specific location in cloud computing environment 10 (e.g. a dead letter queue).

An example schema record is shown below.

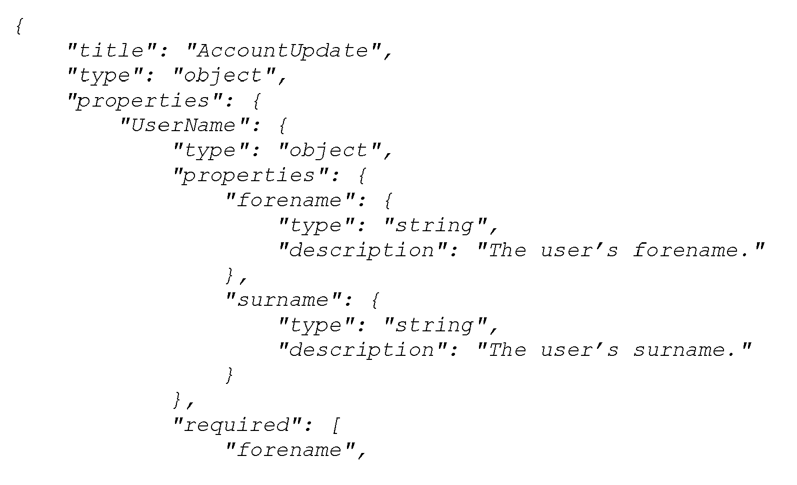

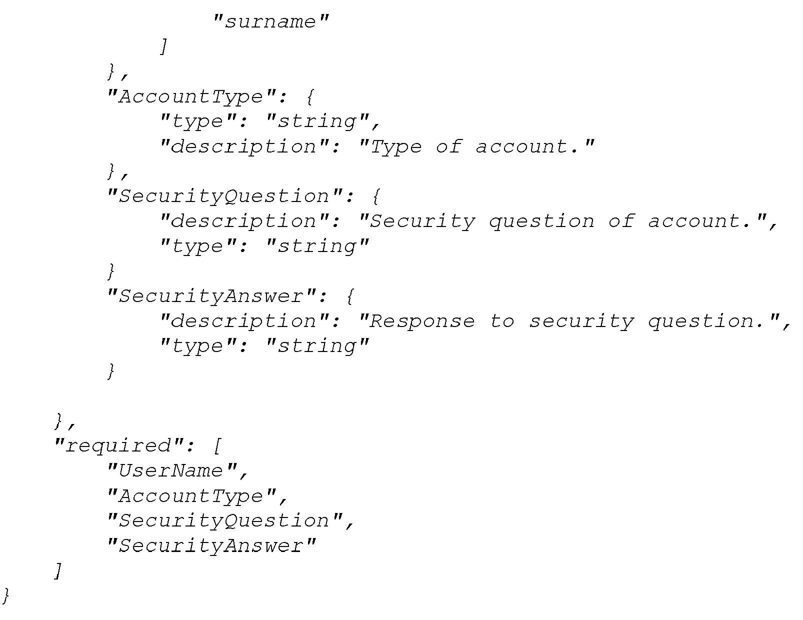

In this example, the schema record is related to event messages 104 that trigger an update to an account. The schema record gives several parameters that must be present in the event message 104 in order for it to be successfully validated. The event message 104 must contain a user name associated with the account, which itself must contain a forename and a surname. This may be required in order to identify the relevant account. The event message 104 must also contain an indication of the account type. This may be required when it is possible for the same user to hold several different types of account. In a consumer banking example, the account types may include "current", "savings" and "ISA". Lastly, the event message 104 must also contain a security question and security answer. These may be a form of password used to check that the account update has been triggered by the true account owner. In this example, all of the required data fields are strings (i.e. text) and the schema validation may include checking whether this is satisfied by an event message 104. Alternatively, one or more of the data fields required by a schema record may be integers (i.e. numbers).

Two examples of an event message 104 to be validated against the above example schema record are shown below. Whilst these schema continue the consumer banking example mentioned above, other contexts are possible.

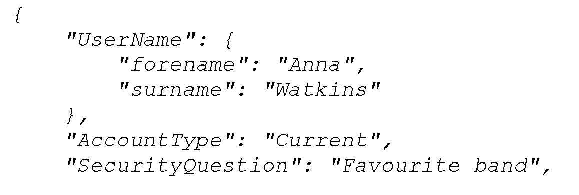

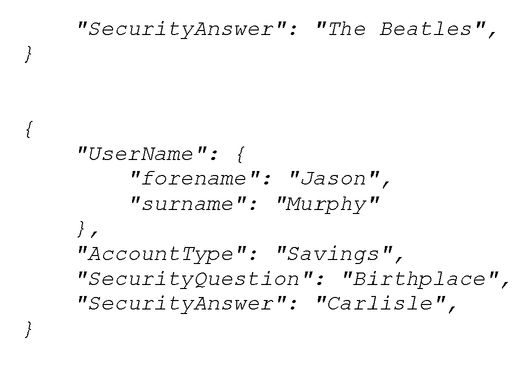

In this example, both of the above schema would undergo successful schema validation because they both contain all of the required fields (forename, surname, account type, security question, and security answer) in the correct format (string).

Once the schema validation has been perfomed (if required), the event message 104 is sent, in step 710, to a cloud-based data service application 102 by pull adapter 16. Optionally, pull adapter 16 may be configured to send the event message 104 to more than one data service application 102 in step 710. As mentioned above, since an event-driven application 135 is defined by a path or paths that data are required to take, the data service application(s) 102 to which a given event message 104 should be sent may be decided on the event-driven application 135 that is being run. Alternatively or additionally, the data service application(s) 102 may be decided based on the event message configuration parameter, and in particular may be based on the type and/or sub-type of event message 104 (which may be determined based on the event message configuration parameter). It may depend on both the event-driven application 135 and the event message configuration parameter, for example in the case where a particular event-driven application 135 requires event messages 104 of a certain type to be sent to a particular data service application 102.

Optionally, pull adapter 16 may be configured to perform an additional security check on the event messages 104 that it has pulled in step 700. As part of the additional security check, pull adapter 16 receives information (e.g. from the data streaming application 101) that indicates how many event messages 104 were generated by that data streaming application 101. As another part of the additional security check, pull adapter 16 is configured to determine how many event messages 104 were successfully pulled from the data streaming application 101. Any discrepancy between these two numbers can indicate interference with the event messages 104 (e.g. message loss), which could indicate an insecure channel between the data streaming application 101 and pull adapter 16. If a discrepancy is determined by pull adapter 16, an alert can be generated for a user. The alert could take the form of an indication of the nature of the discrepancy.

Event messages 104 originating from different data streaming applications can contain different properties and/or formatting, making it difficult to handle event messages 104 of different origins with a single adapter. However, since several components (e.g. the filtering, the schema validation) of pull adapter 16 depend on the event message configuration parameter, they can be made specific to an event message 104. This flexibility enables pull adapter 16 to pull event messages 104 from more than one different data streaming application 101, and to send event messages 104 to more than one different data service application 102.

When executing an event-driven application 135 (as previously described with reference to Figures 3A and 3B), it may be necessary to transfer event messages 104 between different domains 11 (such as the domains 11 described above) within the cloud computing environment 10 (as shown in Figure 7B), and/or from particular data streaming applications 101 to particular data service applications 102 (as shown in Figures 7A and 7B). Whilst the event-driven application 135 is referred to as an application, it is not the same as the data streaming applications 101 or as the data service applications 102.

In addition, a particular event-driven application 135 may require event messages 104 to be transferred in a particular way, for example from a specific data streaming application 101 to a specific data service application 102, depending on the requirements of the event-driven application 135. Hence, the event-driven application 135 is defined by a path or paths that event messages 104 take between the respective data streaming applications 101 and data service applications 102 that are involved in the event-driven application 135. In order to run a given event-driven application 135, event messages 104 may be pulled in step 700 by pull adapter 16 from a data streaming application 101 and delivered in step 710 to a data service application 102.

The event-driven application 135 can be defined by a configuration file, which determines how the features within the cloud computing environment 10 behave in order to execute the event-driven application 135. For example, the configuration file can instruct the features within the cloud computing environment 10 of the path or paths that event messages 104 are required to take through the cloud computing environment 10. This can influence the respective destination to which the different types of event message 104 are delivered. It can also influence the data streaming application(s) 101 from which the event messages 104 are pulled by pull adapter 16. Together, the respective source and destination for an event message 104 are important in defining its path, which can be specific to a particular event-driven application 135. Pull adapter 16 can support the operation of two or more different event-driven applications 135. Pull adapter 16 may be reconfigured by a new configuration file to perform the second or subsequent event-driven application 135, or the second or subsequent event-driven application 135 could be defined together with the first event-driven application 135 in a single (master) configuration file.

### General

The invention can take the form of an entirely hardware embodiment, an entirely software embodiment or an embodiment containing both hardware and software elements. In a preferred embodiment, the invention is implemented in software.

Furthermore, the invention can take the form of a computer program embodied as a computer-readable medium having computer executable code for use by or in connection with a computer. For the purposes of this description, a computer readable medium can be any tangible apparatus that can contain, store, communicate, propagate, or transport the program for use by or in connection with the computer. Moreover, a computer-readable medium can be an electronic, magnetic, optical, electromagnetic, infrared, or semiconductor system (or apparatus or device) or a propagation medium. Examples of a computer-readable medium include a semiconductor or solid state memory, magnetic tape, a removable computer diskette, a random access memory (RAM), a read-only memory (ROM), a rigid magnetic disk and an optical disk. Current examples of optical disks include compact disk-read only memory (CD-ROM), compact disk-read/write (CD-R/W) and DVD.

The flow diagrams in the figures illustrate the architecture, functionality, and operation of possible implementations of the methods of the invention. In some alternative implementations, the steps noted in the figures may occur out of the order noted in the figures. For example, two steps shown in succession may, in fact, be performed substantially concurrently, or the blocks may sometimes be performed in the reverse order, depending upon the functionality involved.

It will be understood that the above description of is given by way of example only and that various modifications may be made by those skilled in the art. Although various embodiments have been described above with a certain degree of particularity, or with reference to one or more individual embodiments, those skilled in the art could make numerous alterations to the disclosed embodiments without departing from the scope of this invention.

### Embodiments

The following list provides embodiments of the invention and forms part of the description. These embodiments can be combined in any compatible combination beyond those expressly stated. The embodiments can also be combined with any compatible features described herein:
1. A module for pulling an event message to a cloud-based data service application, the module configured to: pull at least one event message from at least one cloud-based data streaming application; for each event message of the at least one event message: select and retrieve at least one filter criterion from a plurality of filter criteria based at least in part on at least one event message configuration parameter of the event message; apply the at least one filter criterion to the event message; if the event message passes the at least one filter criterion: determine whether event message schema validation is required based on the at least one event message configuration parameter; if event message schema validation is not required, send the event message to at least one cloud-based data service application; if event message schema validation is required, validate the event message based at least in part on comparing the event message to at least one schema record; if the event message schema validation is successful, send the event message to at least one cloud-based data service application.
2. The module of Embodiment 1, wherein the module being configured to validate the event message further comprises the module being configured to: determine whether the at least one schema record is stored in cache memory; if the at least one schema record is not stored in cache memory: retrieve the at least one schema record from a schema registry and store the at least one schema record in cache memory.
3. The module of any preceding Embodiment, wherein the module is further configured to: if the event message schema validation is unsuccessful, mark the event message as invalid.
4. The module of Embodiment 3, wherein the module is further configured to: if the event message schema validation is unsuccessful, send the event message to the at least one cloud-based data service application.
5. The module of any preceding Embodiment, wherein the module is further configured to select the at least one filter criterion based in part on the at least one cloud-based data service application.
6. The module of any preceding Embodiment, wherein the module being configured to receive the at least one event message from the at least one cloud-based data streaming application further comprises the module being configured to receive at least two event messages from at least two cloud-based data streaming applications.
7. The module of any preceding Embodiment, wherein the module being configured to send the at least one event message to the at least one cloud-based data service application further comprises the module being configured to send the at least one event message to at least two cloud-based data service applications.
8. The module of any preceding Embodiment, wherein each cloud-based data streaming application of the at least one cloud-based data streaming application is associated with a corresponding domain of a first type.
9. The module of any preceding Embodiment, wherein each cloud-based data service application of the at least one cloud-based data service application is associated with a corresponding domain of a second type.
10. The module of any preceding Embodiment, wherein each cloud-based data streaming application of the at least one cloud-based data streaming application is associated with a corresponding cloud-based account of a first type.
11. The module of any preceding Embodiment, wherein each cloud-based data service application of the at least one cloud-based data service application is associated with a corresponding cloud-based account of a second type.
12. The module of any one of Embodiments 1 to 7, wherein the at least one cloud-based data streaming application is associated with a first domain and the at least one cloud-based data service application is associated with a second domain.
13. The module of any one of Embodiments 1 to 7 or 12, wherein the at least one cloud-based data streaming application is associated with a first cloud-based account and the at least one cloud-based data service application is associated with a second cloud-based account.
14. The module of any one of Embodiments 8, 9 and 12, wherein each domain comprises at least one corresponding cloud-based account.
15. The module of Embodiment 12, or of Embodiment 13 when dependent on Embodiment 12, wherein each cloud-based data streaming application is associated with a corresponding cloud-based account of the first domain, and wherein each cloud-based data service application is associated with a corresponding cloud-based account of the second domain.
16. The module of any preceding Embodiment, wherein the at least one cloud-based data service application is configured to perform at least one of data streaming, data queueing, and data storing.
17. The module of any preceding Embodiment, wherein the data streaming application is selected from a list including Amazon Managed Streaming for Amazon Web Services, AWS, Managed Kafka, Amazon Kinesis, Rabbit MQ, Amazon Simple Notification Service, Amazon Simple Queue Service, and Apache RocketMQ.
18. The module of any preceding Embodiment, wherein the data streaming application is selected from a list including Managed Kafka and Amazon Kinesis.
19. The module of any preceding Embodiment, wherein the data service application is selected from a list including Amazon Managed Streaming for Amazon Web Services, AWS, Managed Kafka, Amazon Kinesis, Rabbit MQ, Amazon Simple Notification Service, Amazon Simple Queue Service, Apache RocketMQ, and Amazon DynamoDB.
20. The module of any preceding Embodiment, wherein the data service application is selected from a list including Managed Kafka, Amazon Kinesis, Amazon Simple Queue Service, and Amazon DynamoDB.
21. The module of any preceding Embodiment, wherein the at least one cloud-based data service application is selected based at least in part on the at least one event message configuration parameter.
22. The module of any preceding Embodiment, wherein the at least one cloud-based data streaming application and the at least one cloud-based data service application are selected to define an event-driven application based at least in part on a configuration file.
23. The module of Embodiment 22, further configured to execute at least two different event-driven applications.
24. The module of Embodiment 22 or Embodiment 23, wherein the at least one event message configuration parameter contains information indicative of the event-driven application.
25. The module of any preceding Embodiment, wherein each event message comprises a corresponding event type, and optionally wherein each event message further comprises a corresponding event sub-type.
26. The module of Embodiment 25, wherein the module is further configured to pull at least two event messages from the at least one cloud-based data streaming application, wherein at least two of the corresponding event types of the at least two event messages are not identical.
27. The module of Embodiment 25 or Embodiment 26, wherein the at least one event message configuration parameter of each event message is indicative of the corresponding event type of the event message, and optionally, if each event message comprises a corresponding event sub-type, the at least one event message configuration parameter of each event message is indicative of the corresponding event sub-type of the event message.
28. The module of any one of Embodiments 25-27, wherein the at least one filter criterion is selected based at least in part on the corresponding event type of the event message, and/or where the at least one filter criterion is selected based at least in part on the corresponding event sub-type of the event message.
29. The module of any preceding Embodiment, further configured to: receive information indicative of a first number of event messages generated by the at least one cloud-based data streaming application; determine a second number of event messages pulled by the module; determine whether the first number and the second number are equivalent; and if the first number and the second number are not equivalent, generate an alert for a user.
30. The module of any preceding Embodiment, wherein the module is a cloud-based module.
31. A cloud computing environment comprising the module of any preceding Embodiment.
32. The cloud computing environment of Embodiment 31, further comprising a service integration layer, wherein the service integration layer of the cloud computing environment comprises the module.
33. A computer program configured to implement the module of any one of Embodiments 1 to 30.
34. A non-transitory computer-readable medium comprising instructions that, when executed by a processor, cause the processor to implement the module of any one of Embodiments 1 to 30.

## Claims

1. A module for pulling an event message to a cloud-based data service application, the module configured to:
pull at least one event message from at least one cloud-based data streaming application;
for each event message of the at least one event message:
select and retrieve at least one filter criterion from a plurality of filter criteria based at least in part on at least one event message configuration parameter of the event message;
apply the at least one filter criterion to the event message;
if the event message passes the at least one filter criterion:
determine whether event message schema validation is required based on the at least one event message configuration parameter;
if event message schema validation is not required, send the event message to at least one cloud-based data service application;
if event message schema validation is required, validate the event message based at least in part on comparing the event message to at least one schema record;
if the event message schema validation is successful, send the event message to at least one cloud-based data service application.

2. The module of claim 1, wherein the module being configured to validate the event message further comprises the module being configured to:
determine whether the at least one schema record is stored in cache memory;
if the at least one schema record is not stored in cache memory:
retrieve the at least one schema record from a schema registry and store the at least one schema record in cache memory.

3. The module of any preceding claim, wherein the module is further configured to:
if the event message schema validation is unsuccessful, mark the event message as invalid, and optionally:
wherein the module is further configured to:
if the event message schema validation is unsuccessful, send the event message to the at least one cloud-based data service application.

4. The module of any preceding claim, wherein the module is further configured to select the at least one filter criterion based in part on the at least one cloud-based data service application.

5. The module of any preceding claim, wherein the module being configured to receive the at least one event message from the at least one cloud-based data streaming application further comprises the module being configured to receive at least two event messages from at least two cloud-based data streaming applications.

6. The module of any preceding claim, wherein:
each cloud-based data streaming application of the at least one cloud-based data streaming application is associated with a corresponding domain or cloud-based account of a first type, and/or wherein each cloud-based data service application of the at least one cloud-based data service application is associated with a corresponding domain or cloud-based account of a second type.

7. The module of any one of claims 1 to 5, wherein:
the at least one cloud-based data streaming application is associated with a first domain or first cloud-based account and the at least one cloud-based data service application is associated with a second domain or second cloud-based account.

8. The module of any preceding claim, wherein the at least one cloud-based data service application is configured to perform at least one of data streaming, data queueing, and data storing.

9. The module of any preceding claim, wherein the at least one cloud-based data service application is selected based at least in part on the at least one event message configuration parameter.

10. The module of any preceding claim, wherein the at least one cloud-based data streaming application and the at least one cloud-based data service application are selected to define an event-driven application based at least in part on a configuration file, the module optionally further configured to execute at least two different event-driven applications.

11. The module of claim 10, wherein the at least one event message configuration parameter contains information indicative of the event-driven application.

12. The module of any preceding claim, wherein each event message comprises a corresponding event type, wherein the module is optionally further configured to:
pull at least two event messages from the at least one cloud-based data streaming application, wherein at least two of the corresponding event types of the at least two event messages are not identical.

13. The module of claim 12, wherein the at least one event message configuration parameter of each event message is indicative of the corresponding event type of the event message, and/or wherein the at least one filter criterion is selected based at least in part on the corresponding event type of the event message.

14. The module of any preceding claim, further configured to:
receive information indicative of a first number of event messages generated by the at least one cloud-based data streaming application;
determine a second number of event messages pulled by the module;
determine whether the first number and the second number are equivalent; and
if the first number and the second number are not equivalent, generate an alert for a user.

15. The module of any preceding claim, wherein the module is a cloud-based module.

16. A cloud computing environment comprising the module of any preceding claim.

17. A computer program configured to implement the module of any of claims 1 to 15.
